# EUROPEAN PATENT APPLICATION

(11) **EP 4 797 459 A1**
(43) Date of publication of application: **26.08.2026**
(21) Application number: 26159244.8
(22) Date of filing: 18.02.2026
(51) Int. Cl.: H01R 13/03, H01R 43/16

(54) **CONTACT ELEMENT AND PLUG DEVICE, AS WELL AS MANUFACTURING METHOD AND USE**

(30) Priority: 20.02.2025 DE 102025106534
(71) Applicant: TE Connectivity Solutions GmbH, 8200 Schaffhausen (CH)
(72) Inventor: BLEICHER, Martin, 8200 Schaffhausen (CH); KRAENZLEIN, Harald, 8200 Schaffhausen (CH); RAAB, Stefan, 8200 Schaffhausen (CH); JETTER, Rolf, 8200 Schaffhausen (CH); BURESCH, Isabell, 8200 Schaffhausen (CH)
(74) Representative: Grünecker Patent- und Rechtsanwälte PartG mbB

(57) **Abstract**

The present invention relates to a contact element (1) for a plug device (2), such as a charging plug or a charging socket, wherein the contact element (1) comprises a core (18) made of a first electrically conductive material (22'), a shell (20) made of a second electrically conductive material (22") that at least partially surrounds the core (18) from the outside (22"), and a coating (64) made of a third electrically conductive material (22‴) that is applied at least in some areas to the outside of the shell (20), wherein the first material (22') has a lower density or a higher tensile strength than the second material (22"), and wherein the third material (22‴) differs from the first material (22') and from the second material (22"). The core-shell structure with the relatively light core allows, among other things, weight to be saved in the contact element (1). Furthermore, the present invention relates to a manufacturing method for such a contact element (1) made from a profile material manufactured from at least two materials by extrusion, pressing, or rolling, as well as the use of a coextruded rod material (78) for manufacturing such a contact element (1). In addition, the present invention relates to a plug device (2) with such a contact element (1).

## Description

The present invention relates to a contact element for a plug device, for example for a charging plug or a charging socket of a charging system for electric vehicles. Furthermore, the present invention relates to a manufacturing method for such a contact element made of a bimetal comprising at least two materials, preferably a coextruded, profiled material such as a rod material. The present invention also relates to the use of this rod material for manufacturing such a contact element. In addition, the present invention relates to a plug device with such a contact element.

Electric vehicles are understood here to be purely electrically powered vehicles or vehicles that have an electric drive as a partial drive, such as hybrid vehicles, in particular plug-in hybrids, regardless of their size, i.e., passenger cars, trucks, and commercial vehicles, including those used in agriculture and forestry.

Plug devices are used in numerous technical areas to create detachable connections for the transmission of electrical currents and/or signals. This often involves mutual contact between electrically conductive contact elements of the plug devices to be connected.

In electromobility applications, some plug devices are stationary, for example in a charging station, while others are part of an electric vehicle and must always be transported with it. This results in different requirements for plug devices and their contact elements. For example, stationary plug devices should be as inexpensive and robust as possible to provide a far-reaching, long-lasting charging infrastructure. For efficiency reasons, vehicle-mounted plug devices should be as light as possible.

Therefore, the object of the present invention is to provide a possibility for cost and weight savings in plug connectors.

This object is achieved via the contact element mentioned at the beginning, wherein the contact element comprises a core made of a first electrically conductive material, a shell made of a second electrically conductive material, which shell at least partially surrounds the core from the outside, and a coating made of a third electrically conductive material, which coating is at least partially applied to the outside of the shell, wherein the first material has a lower density or a higher tensile strength than the second material, and the third material differs from the first and second materials.

Here, the density describes the mass density. The third material differs from the first and second materials if the third material comprises at least one component that is absent in the first and second materials, or if the third material lacks components that are present in the first or second materials. In other words, the third material can differ from the first and second materials in its chemical composition.

The advantage achieved with the present invention is based, on the one hand, on the core-shell structure of the contact element. This allows weight to be saved by using a relatively light core. If the core is made of a material with higher strength, this can contribute to a longer service life of the contact element. This can occur with comparatively little loss of current-carrying capacity or current load capacity if, for example, the shell provides the necessary conductor cross-section from a more conductive material and at the same time envelops the core, i.e., surrounds or coats it from the outside. Due to its arrangement on the outer circumference of the core, the shell thus has a large contact area in relation to its conductive cross-section which, in turn, reduces the contact resistance in favor of the current carrying capacity or current load capacity.

On the other hand, the coating can be used to extend the service life and maintenance intervals of the contact element, resulting in a reduction in repair and replacement costs for a plug device that features the contact element according to the invention.

Accordingly, the object mentioned above is also achieved by a plug device with at least one contact element according to the invention and a housing in which the at least one contact element is held. The plug device benefits from the functions and advantages of the invention and thus enables cost and weight savings.

The plug device may be a standardized plug device of a charging system for electric vehicles. The charging system may be DC-powered, AC-powered, or three-phase-powered.

The invention can further be improved by the following designs, each of which is advantageous in its own right and can be combined with each other as desired.

According to a first possible embodiment, the third material may have a higher abrasion resistance than the first and second materials. In other words, the coating may be more abrasion-resistant than the core and, in particular, than the shell. The contact element can thus be used for more charging cycles without repair than would be the case without the coating. Abrasion resistance can be defined, for example, in accordance with ASTM G99.

Alternatively or additionally, the third material may have a higher electrical conductivity than the first and second materials. In other words, the coating may conduct electrical current better than the core and, in particular, than the shell, so that the contact resistance of the contact element is further reduced, which is advantageous.

The shell, in turn, can be provided with a higher electrical conductivity than the core. This means that the second material can have a higher electrical conductivity than the first material. High electrical conductivity is generally associated with high material costs. However, due to the core, the contact element according to the invention does not have to be made entirely of the more conductive material. This can result in a further cost-saving effect.

Due to the core-shell structure of the contact element, the individual materials can be selected as required. The core, shell, and coating can thus be specialized for certain sub-functions to achieve maximum cost and weight savings. According to an exemplary choice of materials, the first material may comprise aluminum, the second material may comprise copper, and/or the third material may comprise silver. In other words, the core may be made of aluminum or an aluminum alloy, the shell may be made of copper or a copper alloy, and the coating may be made of silver or a silver alloy. However, the first material may also contain zinc and/or iron, while the third material may also contain nickel and/or gold.

According to another possible embodiment, the core and the shell may be cold-welded together in at least some areas. In particular, cold welding may occur at an interface between the core and the shell, in which a direct metallic bond exists between the first material of the core and the second material of the shell. As explained in more detail below, cold welding can be achieved, for example, by a cold forming process. This results in sufficient mechanical cohesion between the core and the shell without the first material contaminating the second material through material migration, as would be the case with diffusion processes at high temperatures.

In order to be used as a contact pin, the contact element can extend, in particular, in an elongated or pin-shaped manner along a main direction. Here, the elongated contact element has a dimension or extension that is many times, for example five times, preferably four times, at least three times larger than the remaining dimensions or extensions of the contact element.

According to a further possible embodiment, in a first cross-section of the contact element perpendicular to the main direction, the area ratio between the core and the shell can be at least three to one. This means that a cross-sectional area of the core is three times as large as a cross-sectional area of the shell. This represents a suitable compromise between weight savings in the core and the existing conductor cross-section of the shell. Of course, any other area ratios between the core and the shell may also be present in the first cross-section, such as 4:1, 2:1, 1:1, or 1:2.

Optionally, the contact element in a second cross-section perpendicular to the main direction can be formed entirely from the second or first material. In other words, the contact element can have at least one section without a core or without a shell. In this embodiment, the second cross-section without a core runs through this coreless section and is spaced apart from the first cross-section along the main direction. Advantageously, the coreless section can be formed to be particularly thin and is therefore preferably arranged at a tip of the contact element when viewed in the main direction.

For example, the aforementioned coreless section can be configured for placing or carrying a touch (or contact) protection cap on the tip of the contact element. Accordingly, the contact element can comprise such a touch protection cap, which is configured to be placed on the tip of the contact element. In this embodiment, the touch protection cap is made of an electrically non-conductive material for insulation purposes.

In addition or alternatively, the contact element may be formed entirely from the first material in a third cross-section perpendicular to the main direction. In other words, the contact element may comprise at least one section with a bare or exposed core without a shell and without a coating or without the third material. In this embodiment, the third cross-section runs through this bare section and is spaced apart from the first and second cross-sections along the main direction.

Optionally, the bare section just mentioned can be arranged at an base (extension; German: Ansatz) of the contact element, with this base being located in the main direction opposite the tip of the contact element. When the contact element is installed, the base is directed toward the interior of the plug device, while the tip of the contact element points outward toward a counterpart of the plug device.

The bare section can, for example, perform a purely mechanical function, which is why the shell and coating made of the more conductive materials can be dispensed with there. Of course, the core, particularly the bare section of the contact element, can also be part of the conductor cross-section, especially since the first material of the core is also electrically conductive.

In particular, the core may have a fastening section for a conductor of the plug device. Accordingly, the plug device may have at least one conductor, whereby the core is electrically conductively connected to the at least one conductor. The fastening section may, for example, be formed by the bare section of the contact element and can comprise a welding surface and/or a thread. Alternatively, or additionally, the shell may also have the fastening section for the current conductor.

Preferably, the at least one conductor is made of the same first material as the core or the shell. Due to this material uniformity, the connection between the core or the shell and the at least one conductor is particularly advantageous from an electrochemical point of view, as it is less susceptible to galvanic corrosion. The contact element with an aluminum-containing core can therefore be particularly well suited for combination with aluminum busbars, the use of which is steadily increasing in the field of electromobility. The contact element comprising a shell made of copper or a copper alloy can be particularly well suited for connection to a copper cable and, due to the material similarity, facilitate welding processes, for example.

Alternatively, the core or the first material can also comprise copper. Similarly, the shell or the second material can also comprise aluminum.

It is also advantageous if the first material of the core has better weldability and/or better machinability than the second material of the shell. This makes it easy to create the fastening section on the core.

According to a further possible embodiment, the contact element may have an outer shape that deviates from a straight body at least in some areas. The outer shape may be defined by an outer contour or cubature of the contact element. The deviation from a straight body results in additional degrees of freedom in the design, which makes it possible to improve the functionality of the contact element. For example, the contact element can be provided with an insertion bevel at the tip, which makes the contacting process easier. Similarly, the contact element can have a shoulder for fastening the contact element in the housing of the plug connection.

In order to achieve the desired external shape, the contact element may have at least one cross-sectional change, i.e. a change of cross-section. The at least one cross-sectional change may relate to the total circumference of the contact element measured in the circumferential direction relative to the main direction, in particular the total diameter of the contact element measured perpendicular to the main direction. The at least one cross-sectional change may be located between the base and the tip of the contact element. For simplicity, on may assume in the present description that the base is located before and the tip behind the cross-sectional change. From the base to the tip, the at least one cross-sectional change may represent a cross-sectional taper or a cross-sectional expansion.

Furthermore, the at least one cross-sectional change may be stepped to achieve the aforementioned shoulder. Alternatively, the at least one cross-sectional change may be gradual, which, for example, may provide the aforementioned insertion bevel. Optionally, the contact element may also have several such cross-sectional changes.

According to a further possible embodiment, a first thickness of the shell before the cross-sectional change may differ from a second thickness of the shell after the cross-sectional change. This means that the shell does not have a constant thickness, but rather different thicknesses on different sides of the cross-sectional change or along the longitudinal axis of the component. Here, the shell thicknesses, in particular the first and second thicknesses, are measured perpendicular to the main direction.

For example, the shell thickness may decrease with a cross-sectional reduction, while it may increase with a cross-sectional expansion. Preferably, the shell thickness can be proportional to the total circumference or total diameter of the contact element. As with the cold welding mentioned above, the variable shell thickness can also be achieved by the cold forming process by applying locally different pressing pressures to the contact element.

Optionally, the contact element may have a flange that protrudes radially outward in relation to the main direction. By means of the flange, the contact element can be held in the housing of the plug device in a form-fitting manner in relation to the main direction. Furthermore, the flange does not have to be rotationally symmetrical with respect to the main direction, so that the flange additionally serves for a rotationally fixed or rotation-free attachment of the contact element in the housing of the plug device.

The flange is one of the possibilities for achieving at least one cross-sectional change. Depending on requirements, the flange can be formed from the first material of the core and/or from the second material of the shell. For example, the flange can be arranged on the bare section of the contact element and can protrude radially from the exposed core. Alternatively, the flange can be arranged on the shell and protrude from it.

The object mentioned above is also achieved by a manufacturing process for a contact element. The manufacturing process comprises the steps of providing a profile or rod material with a core made of a first electrically conductive material and a shell made of a second electrically conductive material surrounding the core from the outside, forming the profile or rod material into a profiled pin, and coating the pin with a third electrically conductive material, wherein the first material has a lower density than the second material, and wherein the third material differs from the first and second materials.

The rod material provided may be a coextruded rod material. Alternatively, the rod material may also be manufactured by rolling, pressing, and/or welding. The rod material can be formed directly into the final shape of the component by cold forming below the recrystallization temperature or by hot forming above the recrystallization temperature.

The manufacturing process produces a contact element that offers the advantages and functions already described. The manufacturing process thus contributes to cost and weight savings in plug connectors. By using bimetals, especially in the case where a pin is to be manufactured using the coextruded rod material, the core-shell structure of the contact element can be achieved in a simple and cost-effective manner, and the final shape can be produced in a manufacturing process with several integrated steps.

Consequently, the use of a bimetal, in this case a coextruded rod material for manufacturing a contact element according to one of the above embodiments, also achieves the above-mentioned object if the coextruded rod material comprises a core made of a first electrically conductive material and a shell made of a second electrically conductive material having a higher density and surrounding the core from the outside.

The coextruded rod material can be produced by an extrusion process in which the first and second materials are brought together and pressed through a shaping die. Depending on the desired shape of the bimetal, the material can be cut to the correct length for the production of a component, in particular the profiled pin, either before or after forming.

As an alternative to coextruded rod material, solid rod material or wire made from the first material and a hollow tube made from the second material can also be pushed into each other to obtain the core-shell structure. Subsequent forming into a profiled pin geometry ensures that the core or solid bar material is cold-welded to the shell or hollow tube, creating a durable, high-strength connection.

The aforementioned coreless section can be created, for example, by ensuring that the hollow tube has a suitable protrusion/excess length relative to the solid bar material. In other words, the shell of the profile or bar material can be longer than the core of the profile or bar material. During cold forming, the protruding part of the hollow tube can then be compressed radially, resulting in the coreless section of the contact element. Alternatively (or if there is a suitable protrusion on both sides, additionally), the conductor can be inserted or fitted into the protruding part of the hollow tube to be connected electrically conductive there, for example, to the fastening section of the core.

Similarly, the aforementioned bare section can be created when the solid bar material protrudes from the hollow tube and is therefore not completely covered by the second material of the hollow tube. Accordingly, the core of the profile or bar material can also be longer than the shell of the profile or bar material.

Another alternative for producing a bimetallic material may consist of mechanically cladding the profile material made of the first material with the second material under pressure using a rolling process, thereby creating the shell.

The object mentioned above is also achieved by an electric vehicle, wherein the electric vehicle comprises a plug device according to any one of the preceding embodiments, wherein the plug device is configured as a charging socket for connection to a charging plug of a charging cable.

The object mentioned above is also achieved by a charging station for an electric vehicle, wherein the charging station comprises a plug device according to any one of the preceding embodiments and a charging cable, wherein the plug device is configured as a charging plug on the charging cable for connection to the charging socket of the electric vehicle.

The charging station may, for example, be a public charging station. In particular, the charging station may be a fast-charging station. The charging station may be configured to electrically charge an energy storage device of the connected electric vehicle via the charging cable, the charging plug, and the charging socket in a charging operating state.

All references to norms and standards (e.g., ASTM standards) in this application refer to the version of the corresponding norm or standard valid at the time of filing.

The invention is explained in more detail below with reference to the drawings based on several embodiments, the different features of which can be combined with each other as desired in accordance with the above remarks.

In the drawings:
- Fig. 1: shows a schematic perspective sectional view of a contact element according to a first exemplary embodiment;
- Fig. 2: shows a schematic sectional view of the contact element from Fig. 1 along section plane II-II;
- Fig. 3: shows a schematic sectional view of the contact element from Fig. 1 along the sectional plane III-III;
- Fig. 4: shows a schematic perspective sectional view of the contact element according to a second exemplary embodiment;
- Fig. 5: shows a schematic perspective view of a step in a manufacturing process for the contact element according to a further exemplary embodiment;
- Fig. 6: shows a schematic perspective view of a further step of the manufacturing process; and
- Fig. 7: shows a schematic perspective view of a further step of the manufacturing process.

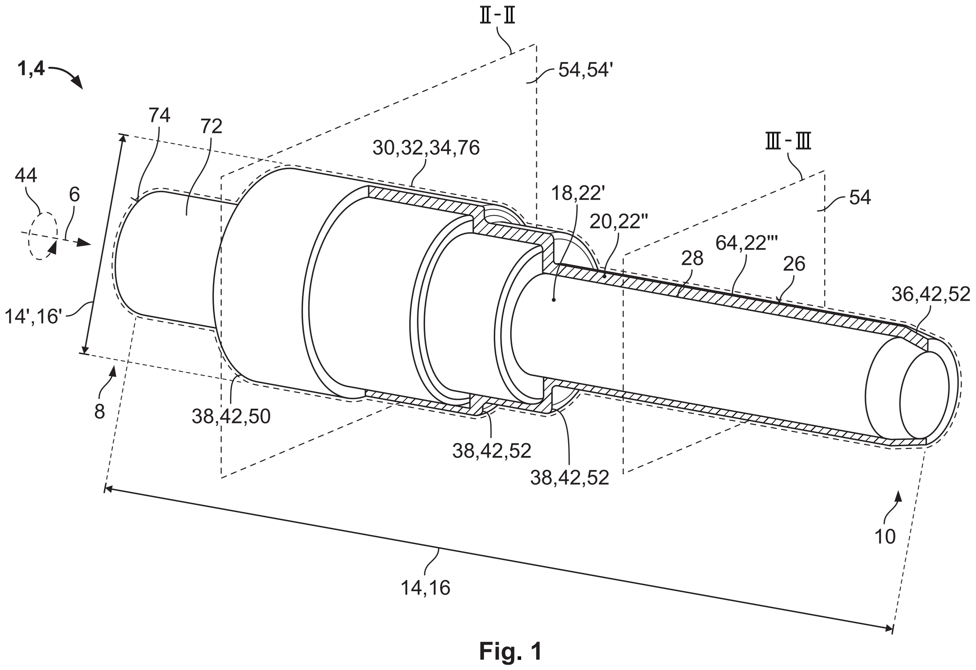

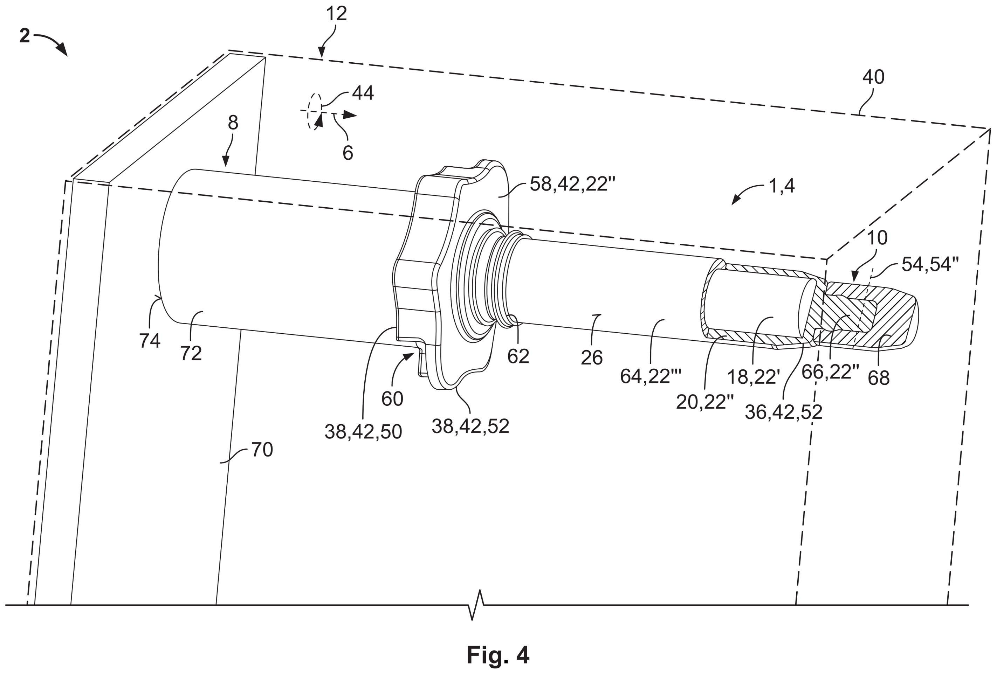

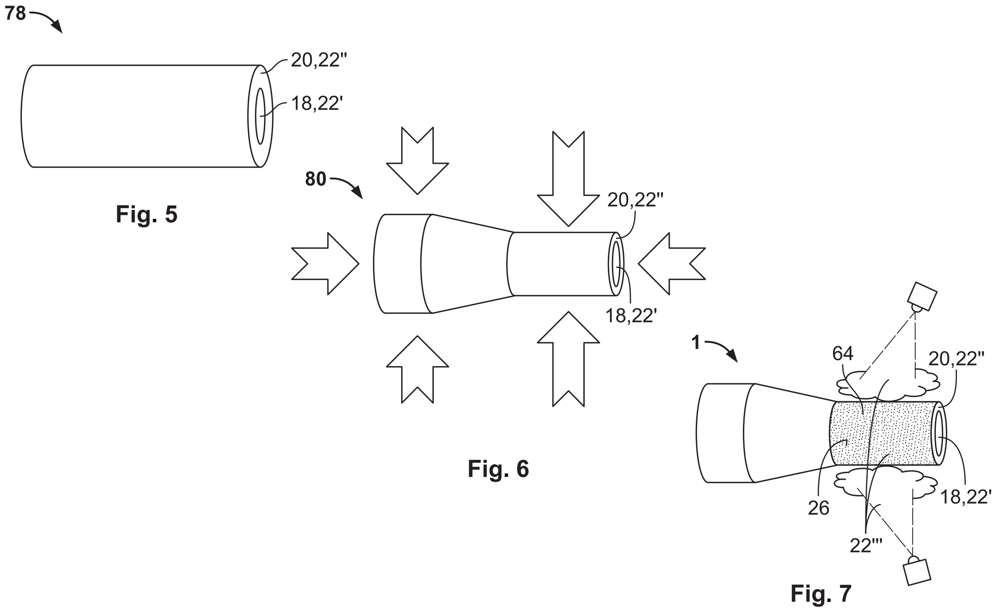

First, the schematic structure of possible embodiments of a contact element 1 is explained with reference to Figs. 1 to 4. Next, the schematic structure of a possible embodiment of a plug device 2 is described with reference to Fig. 4. Finally, a process for manufacturing the contact element 1 is explained with reference to Figs. 5 to 7.

The contact element 1 can be configured as a contact pin 4, as shown in Fig. 1. For this purpose, the contact element 1 can extend in an elongated or pin-shaped manner along a main direction 6 from a base 8 (extension; German: Ansatz) to a tip 10. When the contact element 1 is in an installed state 12, the base 8 is directed toward the interior of the plug device 2, while the tip 10 of the contact element 1 points outward (see Fig. 4).

The elongated contact element 1 has a dimension 14 or extension 16 that is many times, for example five times, preferably four times, at least three times larger than the remaining dimensions 14' or extensions 16' of the contact element 1.

Optionally, the contact element 1 can be configured to be rotationally symmetrical with respect to the main direction 6. Depending on the application, a cuboid shape (not shown) or prismatic shape (not shown) for the contact element 1 may also be considered.

As can be seen from the partial sectional view in Fig. 1, the contact element 1 has a core 18 and a shell 20 that at least partially surrounds/encloses the core 18 from the outside. The core 18 is made of a first electrically conductive material 22', and the shell 20 is made of a second electrically conductive material 22", wherein the first material 22' has a lower density than the second material 22".

This core-shell structure of the contact element 1 and the relatively light core 18 can save weight without excessive loss of current-carrying capacity or current load capacity. This is because the shell 20 provides the necessary conductor cross-section 24 and at the same time envelops the core 18, i.e., surrounds or encases it from the outside. Due to its arrangement on the outer circumference of the core 18, the shell 20 thus has a large contact area 26 in relation to its conductor cross-section 24. This reduces contact resistance in favor of better current carrying capacity or current load capacity.

The shell 20 can be provided with a higher electrical conductivity than the core 18. This means that the second material 22" can have a higher electrical conductivity than the first material 22'. High electrical conductivity is generally associated with high material costs. However, the contact element 1 does not have to be made entirely of the more conductive material due to the core 18. This results in a cost-saving effect.

The core 18 and the shell 20 can be cold welded to each other at least in some areas. In particular, cold welding can occur at an interface 28 between the core 18 and the shell 20, where there is a direct metallic bond between the first material 22' of the core 18 and the second material 22" of the shell 20. As explained in more detail below, cold welding can be achieved, for example, by a cold forming process.

As can also be seen in Fig. 1, the contact element 1 may have an external/exterior shape 30 that deviates from a straight body at least in some areas. The external shape 30 may be defined by an external contour 32 or cubature 34 of the contact element 1. For example, the contact element 1 may be provided with an insertion bevel (or angle) 36 at the tip 10. Similarly, the contact element 1 may have a shoulder 38 for securing the contact element 1 in a housing 40 (see Fig. 4) of the plug device 2.

In other words, the contact element 1 may have one or more cross-sectional changes 42. Each cross-sectional change 42 may affect a total circumference 46 of the contact element 1 measured in a circumferential direction 44 relative to the main direction 6, in particular a total diameter 48 of the contact element 1 measured perpendicular to the main direction 6. The cross-sectional changes 42 may be step-wise where there is a need for the shoulder 38. Other cross-sectional changes 42 may be gradual, which provides the aforementioned insertion bevel 36.

The cross-sectional changes 42 may be distributed between the base 8 and the tip 10 of the contact element 1. In the example shown in Fig. 1, the contact element 1 comprises a cross-sectional expansion 50 and three cross-sectional tapers 52 as cross-sectional changes 42 from the base 8 to the tip 10. Depending on the internal geometry of the housing 40 of the plug device 2, there may also be a different combination of cross-sectional changes 42.

In a first cross-section 54' of the contact element 1 perpendicular to the main direction 6, the area ratio between the core 18 and the shell 20 can be at least three to one. Of course, any other area ratios between the core and the shell can also be present in the first cross-section 54', such as 2:1, 1:1, 1:2, or 1:3.

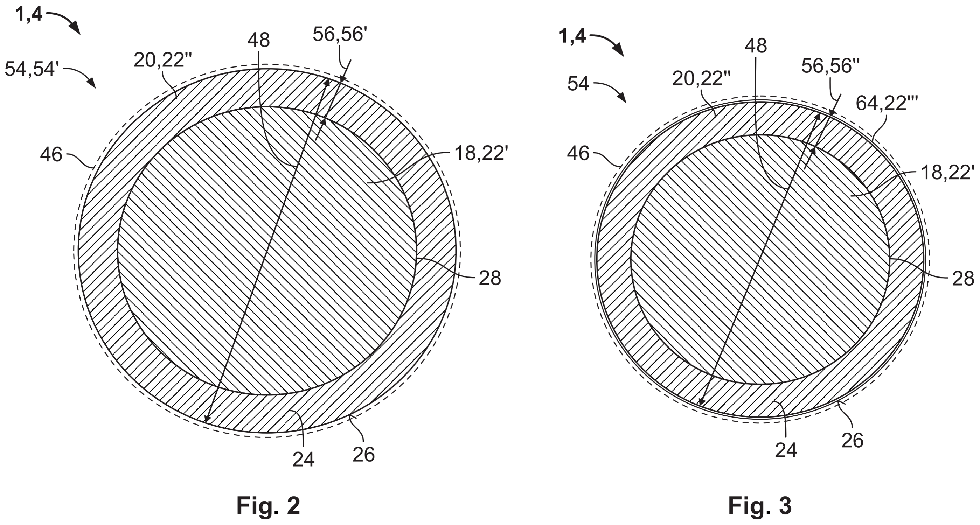

Figs. 2 and 3 show cross sections 54 before and after cross-sectional change 42, respectively. A first thickness 56' of the shell 20 before the cross-sectional change 42 may differ from a second thickness 56" of the shell 20 after the cross-sectional change 42. In other words, the shell 20 does not have to comprise a constant thickness 56. Rather, there are different thicknesses 56 on different sides of the cross-sectional change 42. Here, the shell thicknesses 56, in particular the first thickness 56' and second thickness 56", can each be measured radially to the main direction 6 and can describe the distance between the outermost and innermost material layers. The shell thicknesses 56 thus correspond to a material thickness of the shell 20.

Figs. 2 and 3 show that the shell thickness 56 can decrease with the cross-sectional taper 52, while conversely, the shell thickness 56 increases with a cross-sectional expansion 50. The shell thickness 56 can be proportional to the total circumference 46 or the total diameter 48 of the contact element 1.

Fig. 4 shows the contact element 1 installed in the housing 40 of the plug device 2. In this embodiment, contact element 1 in the housing 40 is accessible from the outside for a mating plug (not shown). Depending on requirements and application, the plug device 2 may also have several contact elements. If the plug device 2 belongs to a direct current charging system, two contact elements may be provided, for example, one as a positive contact (DC+) and the other as a negative contact (DC-). In alternating current or three-phase charging systems, contact elements are provided for the neutral conductor, the protective conductor, and a corresponding number of phase conductors.

It can be seen in Fig. 4 that the contact element 1 may have a flange 58 that protrudes radially outward with respect to the main direction 6. By means of the flange 58, the contact element 1 can be held in the housing 40 of the plug device 2 in a form-fitting manner with respect to the main direction 6. Furthermore, the flange 58 does not have to be rotationally symmetrical with respect to the main direction 6, so that the flange 58 additionally serves as a rotationally fixed or rotation-free attachment for the contact element 1 in the housing 40 of the plug device 2.

In the example shown in Fig. 4, the flange 58 is formed from the second material 22" of the shell 20. In particular, the flange 58 can be arranged on the shell 20 and protrude from it. Alternatively, the flange 58 can be formed from the first material 22' of the core 18. For example, the flange 58 may be arranged on a bare section (not shown) of contact element 1 without shell 20 and may protrude radially from the exposed core 18. A plastic flange (not shown) molded onto the contact element 1 represents a further alternative option.

Optionally, the flange 58 may have a retaining pocket 60 for a temperature sensor (not shown). Following the flange 58 in the main direction 6, a sealing ring 62 may be arranged on the contact element 1, for example by overmolding.

The contact element 1 comprises a coating 64 made of a third, electrically conductive material 22" applied at least in some areas on the outside of the shell 20. The coating 64 is preferably located on the tip 10 of contact element 1. In particular, the coating 64 may be limited to the tip 10. If necessary, the coating may also be applied to the base 8.

The third material 22‴ differs from the first and second materials 22', 22" in that it contains at least one component that is absent from the first and second materials 22', 22", or in that the third material 22‴ lacks components that are present in the first or second materials 22', 22".

For example, the third material 22‴ may have a higher electrical conductivity than the first and second materials 22', 22". In other words, the coating 64 can conduct electricity better than the core 18 and, in particular, better than the shell 20, so that contact resistance of the contact element 1 is advantageously reduced.

Alternatively or additionally, the third material 22‴ may have a higher abrasion resistance than the first and second materials 22', 22". In other words, the coating 64 may be more abrasion-resistant than the core 18 and, in particular, than the shell 20. The contact element 1 can thus be used for more charging cycles without repair than would be the case without the coating. The abrasion resistance can be defined, for example, in accordance with ASTM G99.

According to an exemplary choice of materials, the first material 22' may comprise aluminum, the second material 22" may comprise copper, and/or the third material 22‴ may comprise silver. In other words, the core 18 can be made of aluminum or an aluminum alloy, the shell 20 can be made of copper or a copper alloy, and the coating 64 can be made of silver or a silver alloy.

As can also be seen in Fig. 4, the contact element 1 can be formed entirely from the second material 22" in a second cross-section 54" perpendicular to the main direction 6. In other words, the contact element 1 can have at least one coreless section 66 without core 18. In this embodiment, the second cross-section 54" runs through this coreless section 66 and is spaced apart from the first cross-section 54' along the main direction 6. As demonstrated, the coreless section 66 can be formed particularly thin and is therefore preferably arranged at the tip 10 of the contact element 1.

In particular, the coreless section 66 can be configured for placing or carrying a touch protection cap 68 on the tip 10 of the contact element 1. Accordingly, the contact element 1 can have such a touch protection cap 68, which is placed on the tip 10 of the contact element 1. The touch protection cap 68 is made of an electrically non-conductive material for insulation purposes.

As already indicated, the contact element 1 may have a section with a bare or exposed core without a shell. This bare section may result in the contact element 1 being formed entirely from the first material 22' in a third cross-section (not shown) perpendicular to the main direction 6. The third cross-section runs through the bare section and is spaced apart from the first and second cross-sections 54', 54" along the main direction 6.

Fig. 4 further shows that the plug device 2 may have a conductor 70, which can preferably be made of the same first material 22' as the core 18 in order to avoid galvanic corrosion. The core 18 can be connected electrically conductive to the at least one conductor 70. For this purpose, the core 18 may have a fastening section 72 for the conductor 70. The fastening section 72 may, for example, provide a welding surface 74. Alternatively or additionally, the fastening section 72 may have a thread (not shown). It is therefore advantageous if the first material 22' of the core 18 has better weldability and/or better machinability than the second material 22" of the shell 20 in order to be able to easily realize the fastening section 72.

If the plug device 2 complies with a standard or norm, a shape 76 of the contact element 1, in particular the tip 10, may correspond, at least in sections, to a geometry defined in this standard or norm. Furthermore, the coating 64 may be applied to the contact area 26 as specified in this standard or norm.

The process for manufacturing the contact element 1 is described below. As shown in Fig. 5, the manufacturing process first comprises the step of providing a coextruded rod material 78 with the core 18 made of the first material 22' and the shell 20 made of the second material 22".

As an alternative to the co-extruded rod material 78, a solid rod material (not shown) made of the first material 22' and a hollow tube (not shown) made of the second material 22" can also be pushed into each other to obtain the core-shell structure. Another alternative to the coextruded rod material 78 may be to clad the solid rod material made of the first material 22' with the second material 22" and thus create the shell 20 on it.

This is followed by the step indicated in Fig. 6 of cold forming the rod material 78 into a profiled pin 80. Cold forming ensures that the shell 20 is cold welded to the core 18 and thus held together. Areas of the pin 80 whose total circumference 46 or total diameter 48 are to be reduced particularly significantly are subjected to higher pressure than the rest of the pin 80. In the finished contact element 1, this results in the shell thickness 56 being proportional to the total circumference 46 or total diameter 48 of the contact element 1.

Fig. 7 shows the subsequent step of coating the pin 80 with the third material 22"'. However, the spray coating indicated is only to be understood as an example. Other coating methods, such as electroplating, vacuum coating (PVD/CVD), dip coating, powder coating, and flame spraying, are also possible and intended.

### REFERENCE NUMERALS

- 1: contact element
- 2: plug device
- 4: contact pin
- 6: main direction
- 8: base
- 10: tip
- 12: installed state
- 14, 14': dimension
- 16, 16': extension
- 18: core
- 20: shell
- 22': first material
- 22": second material
- 22‴: third material
- 24: conductor cross-section
- 26: contact area
- 28: interface
- 30: external shape
- 32: external contour
- 34: cubature
- 36: insertion bevel
- 38: shoulder
- 40: housing
- 42: cross-sectional change
- 44: circumferential direction
- 46: total circumference
- 48: total diameter
- 50: cross-section expansion
- 52: cross-section taper
- 54: cross section
- 54': first cross section
- 54": second cross section
- 56: thickness
- 56': first thickness
- 56": second thickness
- 58: flange
- 60: retaining pocket
- 62: sealing ring
- 64: coating
- 66: coreless section
- 68: touch protection cap
- 70: conductor
- 72: fastening section
- 74: welding surface
- 76: shape
- 78: rod material
- 80: profiled pin

## Claims

1. Contact element (1) for a plug device (2), for example a charging plug or a charging socket, wherein the contact element (1) comprises:
- a core (18) made of a first electrically conductive material (22'),
- a shell (20) made of a second electrically conductive material (22"), which shell (20) at least partially surrounds the core (18) from the outside, and
- a coating (64) made of a third electrically conductive material (22‴), which coating (64) is applied at least partially to the outside of the shell (20),
wherein the first material (22') has a lower density or a higher tensile strength than the second material (22"), and wherein the third material (22‴) differs from the first material (22') and from the second material (22").

2. Contact element (1) according to claim 1, wherein the third material (22‴) has a higher abrasion resistance and/or a higher electrical conductivity than the first material (22') and the second material (22").

3. Contact element (1) according to claim 1 or 2, wherein:
- the first material (22') comprises aluminum, copper, zinc, and/or iron,
- the second material (22") comprises aluminum and/or copper, and/or
- the third material (22‴) comprises silver, nickel and/or gold.

4. Contact element (1) according to any one of claims 1 to 3, wherein the core (18) and the shell (20) are cold-welded to each other at least in some areas.

5. Contact element (1) according to any one of claims 1 to 4, wherein the contact element (1) extends along a main direction (6) and, in a first cross-section (54') of the contact element (1) perpendicular to the main direction (6), the area ratio between the core (18) and the shell (20) is at least four to one.

6. Contact element (1) according to claim 5, wherein the contact element (1) is formed entirely from the second material (22") in a second cross-section (54") perpendicular to the main direction (6) and/or is formed entirely from the first material (22') in a third cross-section perpendicular to the main direction (6).

7. Contact element (1) according to any one of claims 1 to 6, wherein the core (18) or the shell (20) has a fastening section (72) for a conductor (70) of the plug device (2).

8. Contact element (1) according to any one of claims 1 to 7, wherein the contact element (1) has an external shape (30) that deviates from a straight body at least in some areas.

9. Contact element (1) according to any one of claims 1 to 8, wherein the contact element (1) has at least one cross-sectional change (42).

10. Contact element (1) according to claim 9, wherein a first thickness (56') of the shell (20) in front of the cross-sectional change (42) differs from a second thickness (56") of the shell (20) behind the cross-sectional change (42).

11. Contact element (1)according to any one of claims 1 to 10, wherein the contact element (1) has a flange (58) formed from the first material (22') and/or from the second material (22").

12. Plug device (2) with at least one contact element (1) according to any one of claims 1 to 11 and with a housing (40) in which the at least one contact element (1) is held.

13. Plug device (2) according to claim 12, wherein the plug device (2) has at least one conductor (70) made of the same first material (22') as the core (18) of the at least one contact element (1), wherein the core (18) of the at least one contact element (1) is connected electrically conductive to the at least one current conductor (70).

14. Plug device (2) according to claim 13, wherein the shell (20) of the at least one contact element (1) is longer than the core (18) of the at least one contact element (1), and wherein the at least one conductor (70) is inserted or fitted into the shell (20) of the at least one contact element (1).

15. Method for manufacturing a contact element (1), comprising the steps of:
- providing a profile or rod material (78) with a core (18) made of a first electrically conductive material (22') and a shell (20) made of a second electrically conductive material (22"), said shell (20) surrounding the core (18) from the outside,
- forming the profile or rod material (78) into a profiled pin (80), and
- coating the pin (80) with a third electrically conductive material (22"'),
wherein the first material (22') has a lower density than the second material (22"), and wherein the third material (22‴) differs from the first material (22') and from the second material (22").

16. Manufacturing method according to claim 15, wherein the shell (20) of the profile or rod material (78) is longer than the core (18) of the profile or rod material (78).

17. Use of a coextruded rod material (78) with a core (18) made of a first electrically conductive material (22') and a shell (20) made of a second electrically conductive material (22"), said shell (20) surrounding the core (18) from the outside (22") and having a higher density or lower tensile strength for manufacturing a contact element (1) for a plug device (2).
